# FASCICULE DE BREVET EUROPEEN

(11) **EP 0 781 503 B1**
(45) Date de publication et mention de la délivrance du brevet: **26.02.2003**
(21) Numéro de dépôt: 96402905.2
(22) Date de dépôt: 26.12.1996
(51) Int. Cl.: A01B 73/06

(54) **Véhicule agricole dont les organes de travail assujettis à une poutre portée par un châssis peuvent être déplacés entre une position de travail et une position de route de moindre encombrement**
Landwirtschaftliches Fahrzeug mit einem von einem Gestell getragenen zwischen Arbeits- und Transportstellung verringerter Breite umschaltbaren Geräteträger
Agricultural vehicle with frame carried tool bar switcheable from a working to a road transport position of reduced width

(30) Priorité: 26.12.1995 FR 9515493
(43) Date de publication de la demande: 02.07.1997
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Tanty, François

(56) Documents cités:
- EP-A- 0 192 917
- EP-A- 0 611 237
- WO-A-93/14619
- DE-C- 4 125 489
- FR-A- 2 636 804

## Description

La présente invention a pour objet un véhicule agricole comportant des organes de travail montés sur une poutre de longueur importante, supportée par le châssis du véhicule ledit véhicule devant pouvoir se déplacer sur une route malgré l'encombrement de la poutre.

La présente invention est en particulier relative à des véhicules agricoles connus sous la dénomination anglaise de "COVERCROP" qui sont munis de charrues notamment à disques ou d'autres organes de travail tels que des broyeurs ou encore d'appareils combinés pour la préparation des sols.

Ces véhicules qui sont généralement remorqués par des tracteurs, comportent le plus souvent des dispositifs qui permettent de déplacer le châssis par rapport aux roues pour placer ce dernier en position haute lors des déplacements sur route ou en position basse pour effectuer le travail agricole.

Les véhicules du type auquel s'applique l'invention comportent solidaire du châssis au moins une poutre de longueur importante qui supporte les organes de travail et qui est orientée dans une direction faiblement inclinée par rapport à la direction perpendiculaire au déplacement du véhicule.

On connaît par WO 93/14619 une charrue à disques de structure complexe qui a pour objet de modifier par l'actionnement d'un seul vérin la position de trois trains de disques ainsi que celle des trains de roulement, afin de réduire la largeur de la charrue lors des déplacements.

On connaît également par FR 2 636 804 un pulvériseur à disques dont chaque train est supporté par une poutre montée pivotante autour d'un axe vertical porté par les longerons centraux du châssis.

La présente invention vise à permettre que les poutres munies de leurs organes de travail puissent être facilement placées dans une position d'encombrement réduit qui permet au véhicule de se déplacer sur route en respectant la réglementation qui limite la largeur des véhicules.

La présente invention a pour but de réaliser un véhicule de ce type qui soit d'une construction simple et d'un prix de revient peu élevé et qui permette de résoudre le problème posé par l'encombrement du véhicule durant ses déplacements.

La présente invention a pour objet un véhicule notamment agricole tel que défini dans la revendication 1.

Selon un premier mode de réalisation de l'invention, la poutre est assujettie au châssis d'une part par un vérin dont la partie mobile se déplace dans une direction fixe par rapport au châssis et dont l'extrémité mobile est articulée en un point fixe de la poutre, et d'autre part par une biellette dont une extrémité est articulée en un point de la poutre et dont l'autre extrémité est articulée en un point fixe du châssis.

Selon un deuxième mode de réalisation de l'invention, la poutre est reliée au châssis à deux biellettes de longueurs inégales, chacune de ces biellettes étant articulée à une de ses extrémités en un point fixe de la poutre et à son autre extrémité en un point fixe du châssis.

Selon un troisième mode de réalisation de l'invention, la poutre est reliée au châssis par le fait qu'un premier ergot solidaire du châssis coulisse sur une glissière longitudinale de la poutre, tandis qu'un second ergot solidaire de la poutre coulisse dans une glissière du châssis.

Selon un quatrième mode de réalisation de l'invention, la poutre est munie d'un ergot qui coulisse dans une glissière du châssis tandis qu'un couple de butées se déplace en restant de part et d'autre d'un dispositif de guidage solidaire du châssis.

Conformément à un mode de réalisation préféré de l'invention, les poutres sont déplacées de leur position de route à leur position de travail et inversement, à l'aide de vérins hydrauliques ou pneumatiques.

Conformément à l'invention, on peut si cela est nécessaire, immobiliser les poutres dans leur position de travail et/ou dans leur position de déplacement à l'aide de dispositifs de blocage appropriés.

Conformément à l'invention, le châssis du véhicule est avantageusement muni d'un dispositif de type connu qui permet de le soulever ou de l'abaisser ainsi que les poutres pour passer de la position de travail à la position de route.

Dans le but de mieux faire comprendre l'invention, on va décrire maintenant plusieurs modes de réalisation donnés à titre d'exemples et sans aucun caractère limitatif de l'invention, en se référant au dessin annexé dans lequel :
- la figure 1 représente une vue schématique de dessus d'un véhicule selon un premier mode de réalisation de l'invention,
- la figure 2 représente une vue schématique de dessus d'un deuxième mode de réalisation de l'invention,
- la figure 3 est une vue schématique de dessus d'un troisième mode de réalisation de l'invention, et
- la figure 4 est une vue schématique de dessus d'un quatrième mode de réalisation de l'invention.

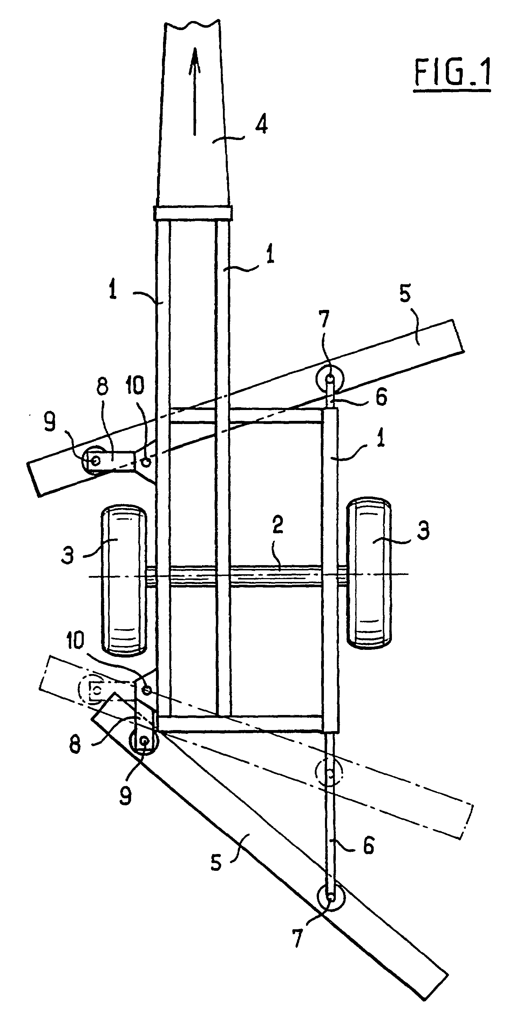

On a représenté sur la figure 1 le châssis 1 du véhicule qui est supporté à la manière conventionnelle par un essieu 2 muni de deux roues 3.

Un dispositif conventionnel non représenté peut être disposé entre le châssis 1 et l'essieu 2 pour abaisser et soulever le châssis afin de passer de la position de route à la position de travail et inversement.

On a également schématiquement représenté la barre d'attelage 4 qui sert à la traction du véhicule dans le sens de la flèche.

Dans ce mode de réalisation, le véhicule comporte deux poutres 5 qui sont munies à leurs parties inférieures d'outils de travail non représentés tels par exemple que des disques de charrues.

Chaque poutre 5 est reliée au châssis d'une part par un vérin 6 coulissant dans le longeron de droite du châssis et dont la partie mobile 6 est articulée en 7 en un point fixe de la poutre 5.

La poutre 5 est également reliée au châssis 1 par une biellette 8 articulée en 9 en un point fixe de la poutre 5 et en 10 en un point fixe du châssis 1.

La poutre 5 disposée dans le haut de la figure 1 est représentée en position de travail en étant faiblement inclinée par rapport à l'axe 2 des roues 3, la partie mobile 6 du vérin étant rentrée à l'intérieur du châssis 1.

Au contraire, la poutre disposée en bas de la figure 1 est représentée en position de route avec une inclinaison importante par rapport à l'axe 2 des roues 3.

Pour cela, la partie mobile 6 du vérin a été repoussée hors du châssis 1, ce qui a provoqué le basculement vers le bas de la biellette 8.

On a représenté en traits mixtes, la position de la poutre 5 disposée au bas de la figure, lorsque le vérin 6 est rentré et que cette poutre se trouve en position de travail.

On remarque que l'encombrement en la largeur du véhicule est nettement inférieur dans la position de route en traits pleins que dans la position de travail en traits mixtes.

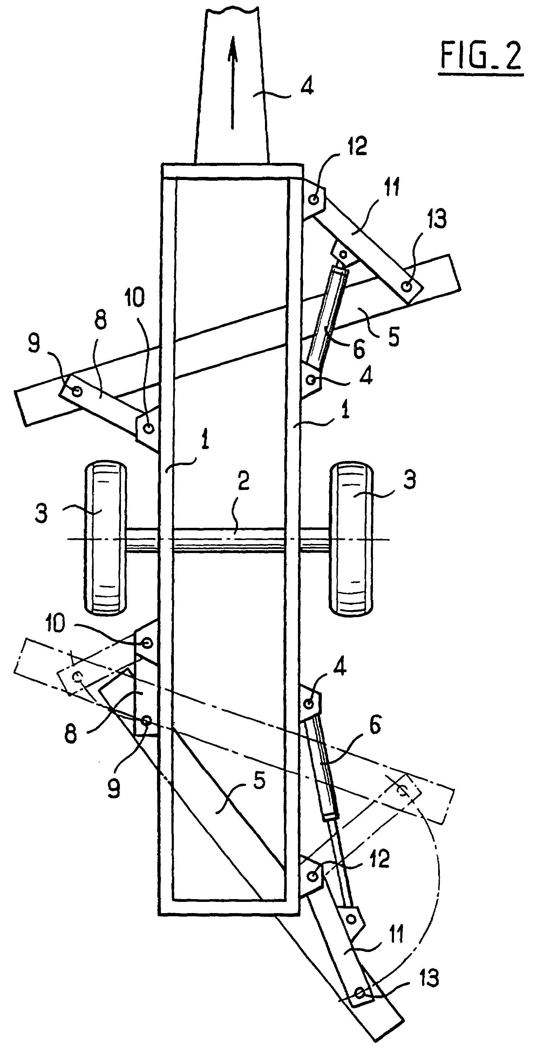

On retrouve sur la figure 2 le châssis 1 supporté par l'essieu 2 et les deux roues 3, ainsi que la barre de traction 4.

Dans ce mode de réalisation, chaque poutre 5 est réunie au châssis d'une part par une biellette courte 8 articulée à une extrémité en 9 en un point fixe de la poutre et à son autre extrémité en 10 en un point fixe du châssis 1 (comme pour la figure 1) et d'autre part par une seconde biellette longue 11 qui est articulée à une de ses extrémités en 13 en un point fixe de la poutre et à son autre extrémité en 12 en un point fixe du châssis.

Comme dans le mode de réalisation la poutre de la partie haute de la figure 2 est représentée en position de travail, c'est-à-dire, en étant dans une direction voisine de celle de l'axe des roues 3, alors qu'à la partie basse de la figure 2 on a représenté la poutre 5 en traits pleins en position de route, c'est-à-dire, avec une plus forte inclinaison par rapport à l'axe 2 des roues.

Ce changement d'orientation de la poutre 5 est obtenu lorsque l'on fait basculer cette dernière autour des biellettes 8,11 grâce au fait que ces biellettes 8 et 11 sont de longueur sensiblement inégale.

On a représenté comment un vérin 6 articulé à une extrémité en un point fixe 14 du châssis et à son autre extrémité au point d'articulation 9 de la biellette 8 sur la poutre 5, permet de faire passer la poutre 5 de sa position de travail à sa position de route et inversement.

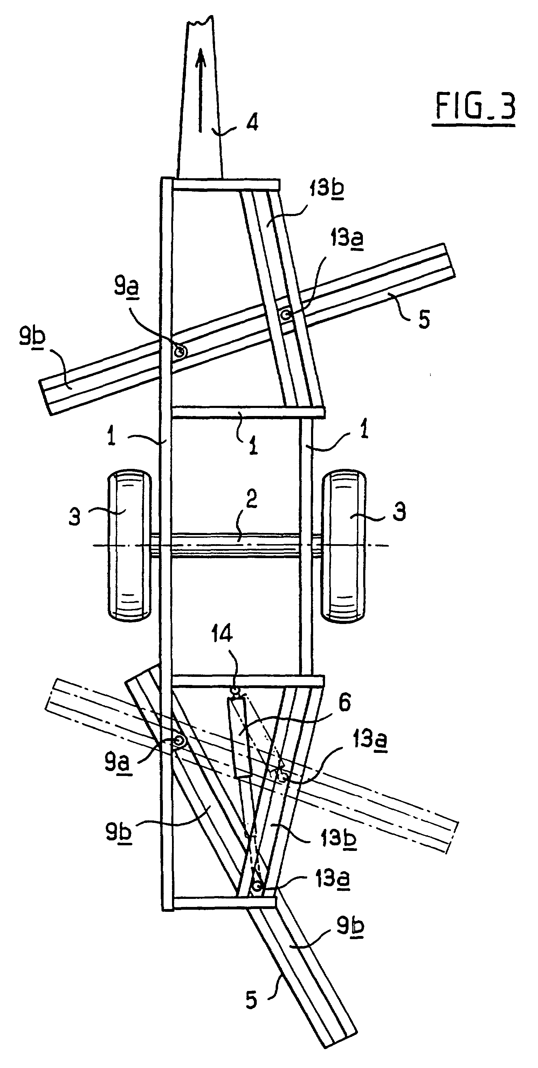

On a représenté sur la figure 3 un troisième mode de réalisation de l'invention, dans lequel le châssis 1 support chaque poutre 5, d'une part, à l'aide d'un ergot 9a solidaire du châssis et dont la tête coulisse dans une glissière 9b solidaire de la poutre 5, et d'autre part à l'aide d'un ergot 13a solidaire de la poutre 5 qui coulisse dans une glissière 13b solidaire du châssis.

Comme dans les modes de réalisation précédemment décrits, on a représenté dans le bas de la figure 3 en traits pleins la position de la poutre 5 lorsque le véhicule se trouve en position de route et en traits mixtes, la position de la poutre 5 lorsque le véhicule est en position de travail.

On a également représenté comment le vérin 6 articulé à une extrémité en un point fixe 14 du châssis à l'autre extrémité au point fixe 13a de la poutre, permet que cette dernière soit facilement amenée de sa position de route à sa position de travail et inversement.

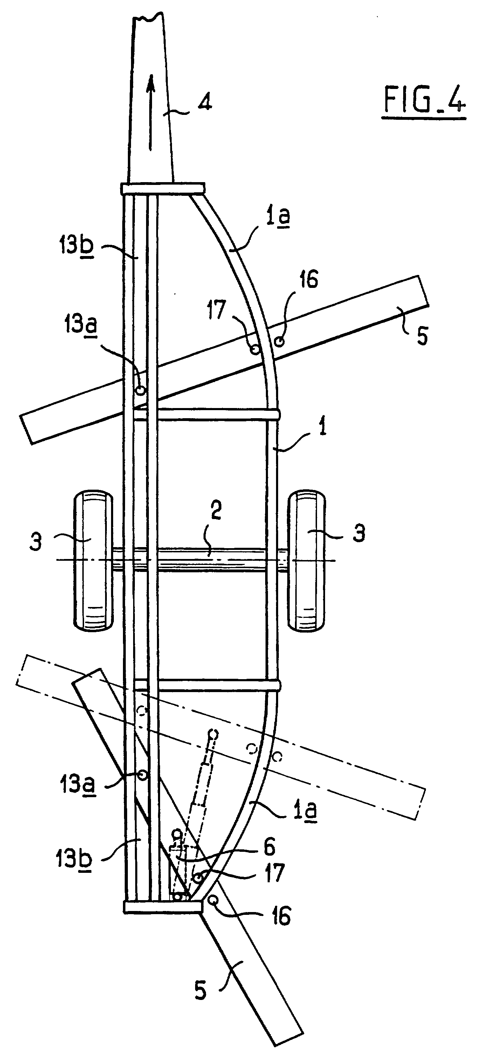

Dans le quatrième mode de réalisation de l'invention qui est représenté sur la figure 4, le châssis 1 comporte sur sa partie gauche une glissière longitudinale 13b dans laquelle un ergot 13a solidaire de chaque poutre 5 peut coulisser longitudinalement.

Dans ce mode de réalisation, le châssis comporte à l'avant et à l'arrière une partie courbe 1a servant de guide pour deux ergots 16 et 17 solidaires de la poutre 5 ce qui permet d'assurer le basculement de la poutre 5 lorsqu'on la déplace par le vérin 6 comme représenté sur la figure 4.

La poutre 5 représentée en traits pleins correspond à sa position de route alors que la poutre 5 représentée en traits mixtes correspond à sa position de travail.

On voit que dans les quatre modes de réalisation décrits, on obtient par des moyens simples et faciles à mettre en oeuvre un déplacement de chacune des poutres du véhicule qui leur permet en passant de leur position de travail à leur position de route d'occuper un encombrement en largeur beaucoup plus faible.

Il est clair que les modes de réalisation qui viennent d'être décrits ne sont donnés qu'à titre d'exemples non limitatifs et qu'ils pourront recevoir toutes modifications désirables sans sortir pour cela du cadre de l'invention.

En particulier, il va de soi que les poutres avant ou arrière peuvent indifféremment être basculées vers l'avant ou vers l'arrière du véhicule.

De même, les dispositifs décrits pour leur basculement peuvent être modifiés en étant placés symétriquement par rapport à l'axe longitudinal du véhicule.

## Revendications

1. Véhicule agricole comportant un châssis supportant au moins une poutre à laquelle sont fixés des organes de travail, ladite poutre pouvant occuper une position de travail dans laquelle elle fait un angle voisin de 90° par rapport à l'axe du véhicule et une position de route dans laquelle elle est rabattue vers l'axe du véhicule, ce dernier étant **caractérisé par le fait que** chaque poutre (5) est directement reliée au châssis (1) par deux éléments (6, 8, 9a, 11, 13a, 16, 17) qui lui imposent simultanément un mouvement de rotation autour d'un axe vertical par rapport au châssis et un mouvement de déplacement latéral par rapport à l'axe longitudinal du châssis, mouvements qui lui imposent de se rabattre vers l'axe du véhicule lorsqu'on déplace la poutre de sa position de travail vers sa position de route et inversement.

2. Véhicule selon la revendication 1, **caractérisé par le fait que** la poutre est assujettie au châssis (1) d'une part par un vérin (6) dont la partie mobile se déplace dans une direction fixe par rapport au châssis et dont l'extrémité mobile est articulée en un point fixe (7) de la poutre et d'autre part par une biellette (8) dont une extrémité est articulée en un point (9) de la poutre et dont l'autre extrémité est articulée en un point fixe (10) du châssis.

3. Véhicule selon la revendication 1, **caractérisé par le fait que** la poutre (5) est reliée au châssis (1) par deux biellettes (8, 11), chacune de ces biellettes étant articulée à l'une de ses extrémités en un point fixe (9, 13) de la poutre (5) et à son autre extrémité en un point fixe (10, 12) du châssis (1).

4. Véhicule selon la revendication 1, **caractérisé par le fait que** la poutre (5) est reliée au châssis par un premier ergot (9a) solidaire du châssis (1) qui coulisse dans une glissière longitudinale (9b) de la poutre (5) tandis qu'un second ergot (13a) solidaire de la poutre (5) coulisse dans une glissière (13b) solidaire du châssis (1).

5. Véhicule selon la revendication 1, **caractérisé par le fait que** la poutre (5) est munie d'un ergot (13a) qui coulisse dans une glissière (13b) du châssis tandis qu'un couple de butées (16, 17) se déplacent en restant de part et d'autre d'un dispositif de guidage (1a) solidaire du châssis (1).

6. Véhicule selon l'une quelconque des revendications précédentes, **caractérisé par le fait que** les poutres sont déplacées de leur position de route à leur position de travail et inversement à l'aide de vérins (6) hydrauliques ou pneumatiques.

7. Véhicule selon l'une quelconque des revendications précédentes, **caractérisé par le fait que** les poutres sont immobilisées dans leur position de travail et/ou dans leur position de déplacement à l'aide de dispositif de blocage.

8. Véhicule selon l'une quelconque des revendications précédentes, **caractérisé par le fait qu'**il comporte un dispositif de type connu permettant de soulever ou d'abaisser le châssis (1) pour passer de la position de travail à la position de route et inversement.

## Patentansprüche

1. Landwirtschaftliches Fahrzeug mit einem Fahrgestell, das wenigstens einen Balken trägt, an dem Arbeitsorgane befestigt sind und der eine Arbeitsposition, in der er mit der Achse des Fahrzeugs einen Winkel von etwa 90° bildet, sowie eine Fahrposition einnehmen kann, in der er zur Achse des Fahrzeugs angeklappt ist, **dadurch gekennzeichnet, daß** jeder Balken (5) mit dem Fahrgestell (1) direkt durch zwei Elemente (6, 8, 9a, 11, 13a, 16, 17) verbunden ist, die ihm gleichzeitig eine Drehbewegung um eine in Bezug auf das Fahrgestell vertikale Achse und eine Seitwärtsbewegung in Bezug auf die Längsachse des Fahrzeugs erteilen, welche Bewegungen dazu führen, daß er gegen die Achse des Fahrzeugs angeklappt wird, wenn der Balken aus einer Arbeitsposition in die Fahrposition verstellt wird, um umgekehrt.

2. Fahrzeug nach Anspruch 1, **dadurch gekennzeichnet, daß** der Balken am Fahrgestell (1) einerseits durch einen Zylinder (6), dessen beweglicher Teil sich in einer festen Richtung in Bezug auf das Fahrgestell bewegt und dessen bewegliches Ende an einen festen Punkt (7) des Balkens angelenkt ist, und andererseits durch einen Lenker (8) gehalten ist, dessen eines Ende an einen Punkt (9) des Balkens angelenkt ist und dessen anderes Ende an einen festen Punkt (10) des Fahrgestells angelenkt ist.

3. Fahrzeug nach Anspruch 1, **dadurch gekennzeichnet, daß** der Balken (5) mit dem Fahrgestell (1) durch zwei Lenker (8, 11) verbunden ist, deren jeder mit einem seiner Enden an einen festen Punkt (9, 13) des Balkens (5) und an seinem anderen Ende an einen festen Punkt (10, 12) des Fahrgestells (1) angelenkt ist.

4. Fahrzeug nach Anspruch 1, **dadurch gekennzeichnet, daß** der Balken (5) mit dem Fahrgestell über einen am Fahrgestell (1) befestigten ersten Zapfen (9a) verbunden ist, der in einer Längs-Gleitführung (9b) des Balkens (5) gleitet, während ein am Balken (5) befestigter zweiter Zapfen (13a) in einer am Fahrgestell (1) befestigten Gleitführung (13b) gleitet.

5. Fahrzeug nach Anspruch 1, **dadurch gekennzeichnet, daß** der Balken (5) einen Zapfen (13a) aufweist, der in einer Gleitführung (13b) des Fahrgestells gleitet, während ein Paar von Anschlägen (16, 17) sich bewegt und dabei auf beiden Seiten einer am Fahrgestell (1) befestigten Führungseinrichtung (1a) bleibt.

6. Fahrzeug nach einem der vorstehenden Ansprüche, **dadurch gekennzeichnet, daß** die Balken mit Hilfe von hydraulischen oder pneumatischen Zylindern (6) aus ihrer Fahrposition in ihre Arbeitsposition und umgekehrt verstellt werden.

7. Fahrzeug nach einem der vorstehenden Ansprüche, **dadurch gekennzeichnet, daß** die Balken mit Hilfe einer Blockiereinrichtung in ihrer Arbeitsposition und/oder ihrer Fahrposition fixiert sind.

8. Fahrzeug nach einem der vorstehenden Ansprüche, **dadurch gekennzeichnet, daß** es eine Einrichtung bekannter Art aufweist, die es gestattet, das Fahrgestell (1) anzuheben oder abzusenken, um es aus der Arbeitsposition in die Fahrposition zu bringen und umgekehrt.

## Claims

1. Agricultural vehicle comprising a frame supporting at least one beam to which working members are fixed, the said beam being able to occupy a work position in which it makes an angle of close to 90º with respect to the axis of the vehicle, and a road-going position in which it is folded back towards the axis of the vehicle, the latter being **characterized in that** each beam (5) is connected directly to the frame (1) by two elements (6, 8, 9a, 11, 13a, 16, 17) which force it simultaneously to move in rotation about a vertical axis with respect to the frame and to move in lateral displacement with respect to the longitudinal axis of the frame, which movements force it to fold back towards the axis of the vehicle when the beam is moved from its work position to its road-going position and vice versa.

2. Vehicle according to Claim 1, **characterized in that** the beam is secured to the frame (1) on the one hand by a ram (6) the moving part of which moves in a fixed direction with respect to the frame and the moving end of which is articulated to a fixed point (7) of the beam and, on the other hand, by a link rod (8) one end of which is articulated to a point (9) on the beam and the other end of which is articulated to a fixed point (10) of the frame.

3. Vehicle according to Claim 1, **characterized in that** the beam (5) is connected to the frame (1) by two link rods (8, 11), each of these link rods being articulated at one of its ends to a fixed point (9, 13) of the beam (5) and at its other end to a fixed point (10, 12) of the frame (1).

4. Vehicle according to Claim 1, **characterized in that** the beam (5) is connected to the frame by a first stud (9a) secured to the frame (1) which slides in a longitudinal slideway (9b) of the beam (5) while a second stud (13a) secured to the beam (5) slides in a slideway (13b) secured to the frame (1).

5. Vehicle according to Claim 1, **characterized in that** the beam (5) is provided with a stud (13a) which slides in a slideway (13b) of the frame while a pair of stops (16, 17) travel, these stops remaining one on each side of a guide device (1a) secured to the frame (1).

6. Vehicle according to any one of the preceding claims, **characterized in that** the beams are moved from their road-going position to their work position and vice versa using hydraulic or pneumatic rams (6).

7. Vehicle according to any one of the preceding claims, **characterized in that** the beams are immobilized in their work position and/or in their travel position using an immobilizing device.

8. Vehicle according to any one of the preceding claims, **characterized in that** it comprises a device of known type allowing the frame (1) to be raised or lowered to move from the work position to the road-going position and vice versa.
